# EUROPÄISCHE PATENTSCHRIFT

(11) **EP 2 868 462 B1**
(45) Veröffentlichungstag und Bekanntmachung des Hinweises auf die Patenterteilung: **25.01.2017**
(21) Anmeldenummer: 14190613.1
(22) Anmeldetag: 28.10.2014
(51) Int. Cl.: B29D 29/00, A47H 23/05, D03D 1/08, D06B 19/00, E06B 9/382, D03D 15/00

(54) **Tragband für Rafflamellenstores, Herstellungsverfahren für ein Tragband sowie Vorrichtung zur Verwendung in einem solchen Herstellungsverfahren**
Belt for a slat blind, method for manufacturing a belt and device for use in such a manufacturing method
Sangle pour un store à lamelles, procédé de fabrication d'une sangle et dispositif d'utilisation dans un tel procédé de fabrication

(30) Priorität: 04.11.2013 DE 102013112094
(43) Veröffentlichungstag der Anmeldung: 06.05.2015
(73) Patentinhaber: Julius Boos jr. GmbH & Co. KG, 42277 Wuppertal (DE)
(72) Erfinder: Textor, Lutz, 42855 Remscheid (DE)
(74) Vertreter: Buse, Mentzel, Ludewig Patentanwaltskanzlei

(56) Entgegenhaltungen:
- DE-A1- 3 217 717
- DE-A1- 4 403 272
- DE-A1- 4 429 036
- DE-C2- 2 551 224
- DE-U1-202007 010 465

## Beschreibung

Die Erfindung betrifft ein Tragband für Rafflamellenstores, ein Verfahren zur Herstellung eines Tragbandes für Rafflamellenstores, sowie eine Vorrichtung zum quasikontinuierlichen Thermofixieren und Glätten eines gewebten Bandes bei der Herstellung eines Tragbandes für Rafflamellenstores.

Neben Tragbändern aus Stahl, die in nachteiliger Weise bei geringen Bewegungen der Lamellen des Rafflamellenstores Geräusche verursachen, werden vor allem Gewebebänder aus Polyesterfäden eingesetzt. Zur Herstellung solcher Tragbänder werden weiße, hochfeste Polyesterfäden zu einem Gewebeband verwebt. Dieses Gewebeband durchläuft anschließend verschiedene chemische Bäder, um das Band entsprechend den Anforderungen auszurüsten und zu färben. Das trockene ausgerüstete Gewebeband wird in Längsrichtung gereckt und anschließend einem Kalander zugeführt, wo eine Thermofixierung und Dickeneinstellung des Bandes erfolgt. Ein ähnliches Verfahren wird in dem deutschen Patent DE 25 51 224 C2 sowie den Druckschriften DE 32 17 717 A1 und DE 44 29 036 A1 beschrieben.

Beide Verfahren führen in nachteiliger Weise zu einem Tragband, dass keine ausreichend gleichmäßige Dicke aufweist, eine zu raue Oberfläche und eine zu hohe Steifheit besitzt. Darüber hinaus fransen diese Tragbänder nach dem Stand der Technik nach längerem Gebrauch aus, was unerwünscht ist.

Aufgabe der vorliegenden Erfindung ist es daher, ein Tragband mit mindestens der gleichen Reißfestigkeit, Farb- und UV-Beständigkeit und darüber hinaus mit einer gleichmäßigen Banddicke und ggf. einer definierten Steifigkeit zur Verfügung zu stellen, dass eine höhere Gebrauchsdauer hat.

Diese Aufgabe wird mit einem Tragband mit den Merkmalen des Anspruchs 8 gelöst. Vorteilhafte Eigenschaften sind in den Unteransprüchen 9 bis 11 beschrieben. Ein solches Tragband lässt sich nach einem erfindungsgemäßen Verfahren gemäß Anspruch 1 herstellen. Vorteilhafte Verfahrensvarianten geben die Ansprüche 2 bis 7 an. In diesem erfindungsgemäßen Verfahren wird zum Thermofixieren und Glätten sowie gegebenenfalls auch zum Recken eine Vorrichtung mit den Merkmalen der Ansprüche 12 bis 13 vorteilhaft eingesetzt.

Das neue Tragband besteht aus einem Gewebe, aus thermoplastischen, hochfesten spinndüsengefärbten Fäden. Das Tragband weist aufgrund der Verwendung dieser Fäden bereits eine hohe Farbechtheit und Witterungsbeständigkeit auf. Diese thermoplastischen Fäden bestehen vorzugsweise aus Polyestergarn, besonders bevorzugt aus mehrfach verdrilltem Multifilamentgarn, die zu einer zugfesten Gewebestruktur verwebt sind, so dass sich bereits nach dem Weben ein relativ unelastisches Band ergibt, welches durch Recken und anschließendem Thermofixieren eine Dehnung von maximal 1,3% erhält und eine Reißfestigkeit von größer 700 N, vorzugsweise ca. 1000 N. Die Reißfestigkeit verringert sich mit der Nutzungsdauer. Ein Witterungstest, bei dem das Band über einen Zeitraum von 1000 Stunden einer UV-Bestrahlung ausgesetzt wird, zeigt, dass das Tragband nach diesen 1000 Stunden noch eine Reißfestigkeit von mehr als 350 N, vorzugsweise etwa 500 N aufweist.

Die Farbe des Tragbandes wird durch die Farbe der ursprünglich eingesetzten Fäden für das Gewebe festgelegt. Diese Farbe kann so gewählt sein, dass die Tragbänder an die Farbe der Rafflamellenstores angepasst sind. Vorzugsweise werden schwarz gefärbte Tragbänder eingesetzt.

Eine wesentliche Forderung für ein Tragband für Rafflamellenstores ist die einheitliche Dicke des Tragbandes über seine gesamte Länge. Ein solches Tragband wird beispielsweise an zwei Seiten der Rafflamellenstores vorgesehen. Unterschiedliche Dicken der Tragbänder führen beim Hochziehen der Lamellenstores zu einem ungleichmäßigen Aufrollen der Tragbänder auf für diese vorgesehene Rollen, was unerwünscht ist. Beim Stand der Technik werden die Tragbänder zum Glätten einem Kalander zugeführt. Für eine ausreichende Glätte und einheitliche Dicke der Tragbänder ist der Flächendruck auf die Bänder jedoch für einen gewissen Zeitraum aufrechtzuerhalten, was zu einem extrem geringen Vorschub beim Kalandrieren führen würde und das Verfahren uneffektiv macht. Die Erfindung schlägt vor, das Tragband mit einem quasikontinuierlichen Verfahren unter Verwendung einer heißen Presse zu glätten. Längsabschnitte eines Bandes werden taktweise in die Presse eingezogen, über einen ausreichenden Zeitraum gepresst und nach dem Pressen aus der Presse herausgezogen. Der notwendige Pressdruck kann für einen Zeitraum von 1 bis 10 Sekunden, vorzugsweise 4 Sekunden aufrechterhalten werden. Diese Zeit reicht bei einem Flächendruck von 5 MPa bis 20 MPa, vorzugsweise 15 MPa und einer Temperatur von 150°C bis 300 °C, vorzugsweise 250 °C aus, ein ausreichendes Glätten und Thermofixieren eines Bandes aus Polyester zu bewirken. Das Verfahren und die Vorrichtung werden nachfolgend noch beschrieben. Dieses Verfahren unter Verwendung der Pressvorrichtung für das Glätten und Thermofixieren führt zu einem Band mit einer gleichmäßigen Dicke, die über die gesamte Längsausdehnung eine Dickenvariation von höchstens 0,015 mm aufweist. Beim Verpressen lässt sich durch Auswahl der Temperatur und des Flächendrucks auch die Steifheit des Bandes einstellen. Ein für Tragbänder akzeptabler Toleranzbereich der Steifheit wird nach einem speziellen Messverfahren bestimmt. Hierzu wird ein Band einer Länge von 1000 mm über einen Auflagedorn mit einem Durchmesser von 5 mm gelegt. Die freien Enden des Bandes müssen sich dann in einem Abstand zwischen 40 mm und 60 mm befinden. Eine höhere Steifheit würde die Drapierbarkeit beim Rafflamellenstore negativ beeinflussen.

Ein besonders vorteilhaftes Verfahren zu Herstellung eines solchen Tragbandes für Rafflamellenstores umfasst die folgenden Verfahrensschritte, nämlich
- Weben eines unelastischen Bandes,
- Recken des gewebten Bandes,
- Thermofixieren und Glätten des gewebten und gereckten Bandes in einer Pressvorrichtung und
- Entnahme eines thermofixierten und geglätteten Bandes aus der Pressvorrichtung.

Hierbei wird ein Band aus hochfesten, spinndüsengefärbten Fäden gewebt, wobei die Fäden aus thermoplastischem Material bestehen, vorzugsweise aus Polyester. Es sind jedoch auch thermoplastische hochfeste Garne aus anderen Kunststoffen, beispielsweise aus Polyamid oder hochverstreckten Polyethylen, denkbar. Die eingesetzten thermoplastischen Fäden erhalten bereits bei deren Herstellung durch Spinndüsen eine Einfärbung, die witterungsbeständig und farbecht ist. Zum Weben werden vorzugsweise verdrillte Multifilamentgarne eingesetzt, sowohl als Kettfäden als auch als Schussfäden. Die Kettfäden und Schussfäden werden zu einer möglichst festen Gewebestruktur verwebt. Bei einer bevorzugten Ausführungsform wird eine Gewebestruktur für das Band ausgewählt, die bereits zu einem annähernd unelastischen Gewebe führt, beispielsweise die Webstruktur "Köper". Um ein Ausfransen der Kanten zu verhindern, insbesondere auch nach einem langen Gebrauch, werden beim Weben an den Längskanten des Bandes durch Fangfäden die Schussfäden eingefangen und zusätzlich mittels Sperrfäden eine Vermaschung der Längskanten vorgesehen, beispielsweise mit einem bekannten Websystem "Müller System 5".

Das Recken der gewebten Bänder kann in einer separaten Vorrichtung oder beim Einziehen der Bänder in die erfindungsgemäße Pressvorrichtung erfolgen. Diese Pressvorrichtung ermöglicht dann in einem dem Recken nachfolgenden Pressvorgang, d.h. unter Druckanwendung und bei erhöhter Temperatur, ein Thermofixieren und Glätten von Längsabschnitten mindestens eines Bandes. Bei einem vorteilhaften und kostengünstigen Verfahren werden gleichzeitig mehrere gewebte Bänder in die Pressvorrichtung eingezogen, gleichzeitig gereckt und gleichzeitig gepresst. Besonders bevorzugt werden mindestens vier gewebte Bänder gleichzeitig in die Pressvorrichtung eingezogen. Zum Einziehen der gewebten Bänder werden Anordnungen mit rotierenden Walzen vor und hinter der Pressvorrichtung vorgesehen. Diese Anordnungen dienen zum einen zum Halten der gewebten Bänder während des Pressvorgangs und zum andern zum Transport der Bänder, insbesondere zum taktweisen Vorschub der Bänder nach jedem Pressvorgang. Bei einem solchen Vorschub der Bänder werden diese gleichzeitig gereckt, da die Anordnung mit den rotierenden Walzen vor der Pressvorrichtung, der Bandeinzug, und die Anordnung mit den rotierenden Walzen hinter der Pressvorrichtung, der Bandauszug, mit unterschiedlichen Geschwindigkeiten betrieben werden. Der Bandauszug wird mit einer höheren Geschwindigkeit bewegt. Dies wird mittels einer Getriebeuntersetzung bewirkt, so dass beide Anordnungen mit rotierenden Walzen von einem Motor angetrieben werden können. Für den Pressvorgang werden die gewebten und gereckten Bänder zwischen zwei Werkzeughälften im Pressraum der Pressvorrichtung positioniert und mindestens eine Werkzeughälfte mit einem entsprechenden Druck auf die zweite Werkzeughälfte zu bewegt, so dass sie ein Flächendruck auf den Bändern von 5 MPa bis 20 MPa, vorzugsweise 15 MPa ausübt. Dieser Druck wird für eine Zeitspanne von 1 bis 10 Sekunden, vorzugsweise 4 Sekunden aufrechterhalten. Die Pressung erfolgt unter Wärmeeinwirkung. Hierzu werden beide Werkzeughälften oder zumindest eine Werkzeughälfte mittels einer Heizung vorgeheizt. Die zweite Werkzeughälfte kann durch Übertragung von Wärme der ersten Werkzeughälfte vorgewärmt werden. Der Pressvorgang sollte bei Temperaturen von 150°C bis 300 °C, vorzugsweise 250 °C erfolgen, um eine Thermofixierung der thermoplastischen Bänder und Glättung der Oberfläche der Bänder zu erzielen. Da der Vorschub der Bänder in der Pressvorrichtung zum einen mit dem Recken kombiniert werden kann und zum anderen taktweise erfolgt, ergibt sich damit ein betriebswirtschaftlich günstiges, quasikontinuierliches Verfahren.

Der Einzug der Bänder kann sich unmittelbar an das Weben der Bänder anschließen, bevorzugt werden die gewebten Bänder jedoch aufgewickelt und vor dem Pressen durch den Bandeinzug von einer Rolle oder einem Coil abgewickelt. In gleicher Weise wird hinter der Pressvorrichtung vom Bandauszug jedes geglättete Band zu einem Coil oder einer separaten Rolle transportiert und dort aufgewickelt.

Eine solche Vorrichtung zum quasikontinuierlichen Thermofixieren und Glätten eines gewebten Bandes muss einen Pressraum zwischen zwei Werkzeughälften aufweisen. Die Werkzeughälften sollten eine plane Oberfläche besitzen, da eine glatte Oberfläche des gepressten Bandes gewünscht wird. Zumindest eine Werkzeughälfte sollte für den Pressvorgang zwischen einer Ruheposition und einer Arbeitsposition bewegbar sein. Um die Bänder an einer Seite in den Pressraum hineinzuziehen und ungestört am gegenüberliegenden Ende wieder herausziehen zu können, d.h. für den taktweisen Vorschub und Transport der Bänder durch die Pressvorrichtung, sollte der Pressraum an mindestens zwei gegenüberliegenden Seiten zugänglich sein. An diesen beiden gegenüberliegenden Seiten sind neben dem Pressraum jeweils Haltemittel für ein oder mehrere Bänder vorgesehen, so dass zumindest jeweils ein Längsabschnitt der Bänder im Pressraum gehalten werden kann. Um einen taktweisen Vorschub der Bänder für ein quasikontinuierliches Thermofixieren und Glätten zu ermöglichen, sind Transportmittel notwendig, so dass nacheinander Längsabschnitte der Bänder in den Pressraum hinein- und herausgezogen werden können. In vorteilhafter Weise bestehen die Halte- und Transportmittel gemeinsam aus einer Anordnung von mehreren rotierenden Walzen, nämlich vor dem Pressraum einen Bandeinzug und hinter dem Pressraum ein Bandauszug. Ein gemeinsamer Motor kann zum Antrieb beider Anordnungen eingesetzt werden, d.h. sowohl des Bandeinzugs als auch des Bandauszugs. Durch eine Getriebeuntersetzung am Bandauszug bewegt sich der Bandauszug jedoch schneller als der Bandeinzug und bewirkt bei jedem Vorschub des Bandes bzw. der Bänder ein Recken. Das Recken der Bänder erfolgt damit unmittelbar vor dem Pressvorgang und in der gleichen Vorrichtung. Für einen möglichst ungestörten Transport der Bänder durch die Pressvorrichtung werden die Bänder parallel zueinander angeordnet und in paralleler Ausrichtung durch die Pressvorrichtung transportiert. Hierfür werden in vorteilhafter Weise entsprechende Führungen für die einzelnen Bänder vor und hinter der Pressvorrichtung vorgesehen.

In einem Pressvorgang ist es aufgrund der Dimensionierung der Pressvorrichtung nur möglich, einen gewissen Längsabschnitt von jedem in die Pressvorrichtung eingezogenen Band zu pressen und zu glätten. Um eine gleichmäßige Dicke und Oberflächenbeschaffenheit des Bandes zu gewährleisten, wird der taktweise Vorschub der Bänder so gewählt, dass der unmittelbar geglättete Längsabschnitt der Bänder nicht vollständig aus dem Pressraum der Pressvorrichtung herausgezogen wird, sondern das Endstück des gepressten Längsabschnittes in dem nächsten Pressvorgang noch einmal verpresst wird, d.h. es erfolgt eine überlappende Pressung der einzelnen Längsabschnitte.

Die Erfindung wird nachfolgend an einem Ausführungsbeispiel erläutert, die Erfindung ist nicht auf dieses Ausführungsbeispiel beschränkt. Es wird ein Band mit Kettfäden und mit Schussfäden aus spinndüsengefärbten schwarzen, hochfesten Polyestergarn gewebt. Das Einfachgarn für die Kettfäden ist 80-fach verdrillt, weist 48 Filamente auf und besitzt eine Feinheit von 280 dtex. Als Schussfäden werden Einfachgarne mit 200 Verdrillungen und 24 Filamenten eingesetzt, die eine Feinheit von 74 dtex besitzen. Die gleichen Fäden wie für die Schussfäden werden auch für die Fangfäden und für die Sperrfäden verwendet, die eine Vermaschung der Längskanten bewirken. Als Gewebestruktur wurde eine Köper-Bindung verwendet. Die Vermaschung erfolgt nach dem bekannten System Müller System 5.

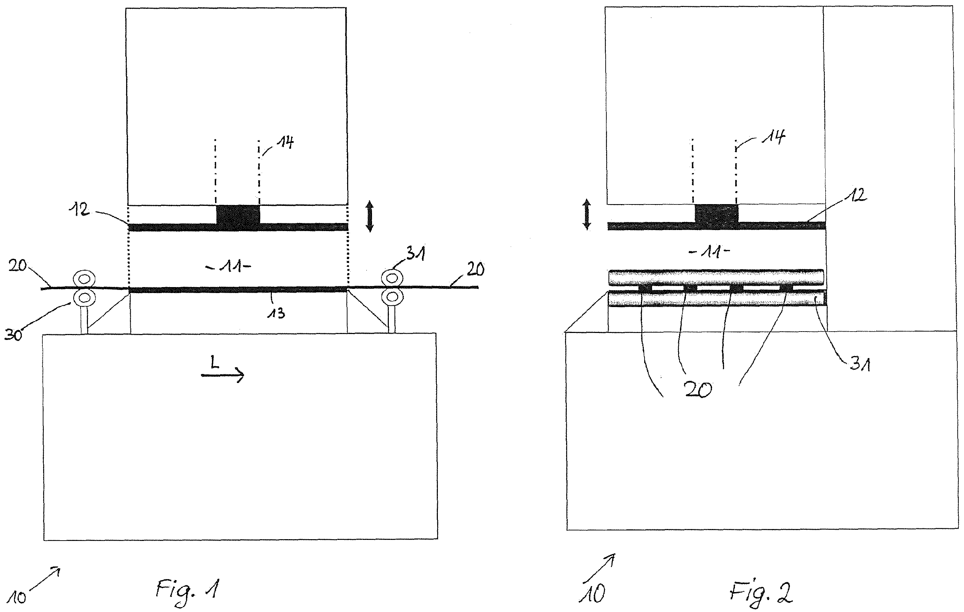

Das so gewebte Band wurde nach dem Weben aufgewickelt. Mit vier Rollen eines solchen Bandes wurde der Reck-, Thermofixier- und Glättvorgang in der erfindungsgemäßen Vorrichtung durchgeführt, die schematisch in den Figuren 1 und 2 dargestellt ist. Fig. 1 zeigt die Vorderansicht einer solchen Vorrichtung 10 und die Fig. 2 die Seitenansicht.

Diese Vorrichtung 10 umfasst zwei Werkzeughälften 12, 13 mit einer planen Oberfläche, die von einem Maschinengestell gehalten werden. Die obere Werkzeughälfte 12 ist bewegbar, d.h. aus einer Ruheposition in eine Arbeitsposition absenkbar. Die untere Werkzeughälfte 13 ist in diesem Fall unbeweglich angeordnet. Zwischen den beiden Werkzeughälften 12, 13 ist der Pressraum 11, in den zum Thermofixieren und Glätten von Bändern 20, nacheinander Längsabschnitte der Bänder 20 hineingebracht werden. Da der Pressraum 11 von zwei gegenüberliegenden Seiten zugänglich ist, können die Bänder 20 taktweise durch den Pressraum 11 hindurchbewegt werden. Dazu dienen zwei Anordnungen mit mehreren rotierenden Walzen, zum einen vor dem Pressraum 11 der Bandeinzug 30 und eine weitere Anordnung in Längsrichtung L des Bandes 20 hinter dem Pressraum 11, der Bandauszug 31. Befindet sich ein zu pressender Längsabschnitt des Bandes 20 innerhalb des Pressraums 11, wird das Band 20 während des Absenkens der oberen Werkzeughälfte 12 vom Bandeinzug 30 und Bandauszug 31 gehalten. Beim Pressen wird für eine Mindestzeitspanne, in diesem Fall 4 Sekunden, unter Temperatur- und Druckeinwirkung der jeweilige Längsabschnitt des Bandes 20 thermofixiert und geglättet. Die Wärme wird mittels der Werkzeughälften 12, 13 übertragen. Es können dazu beide Werkzeughälften 12, 13 mittels einer Heizung 14 vorgeheizt sein. Bei der gezeigten Vorrichtung 10 wird nur die obere Werkzeughälften 12 beheizt und durch eine Vorheizzeit, in der die obere Werkzeughälften 12 an der unteren Werkzeughälften 13 anliegt, eine ausreichende Erwärmung der unteren Werkzeughälften 13 sichergestellt. In diesem Beispiel werden gleichzeitig vier Bänder 20 geglättet, siehe Fig. 2. Nach dem Pressvorgang werden diese Bänder 20 mittels des Bandeinzugs 30 und mittels des Bandauszugs 31 in Längsrichtung L vorwärts transportiert, vorzugsweise sind hierfür zusätzlich entsprechende Führungen an der Vorrichtung 10 vor und hinter dem Pressraum 11 für den parallelen Vorschub der Bänder 20 vorgesehen, welche in den Figuren nicht gezeigt sind. Die gepresste Längsabschnitte jedes Bandes 20 werden aus dem Pressraum 11 herausgezogen und neue Längsabschnitte jedes Bandes 20 werden in den Pressraum 11 hineingezogen. Bei jedem Vorschub der Bänder 20 erfolgt gleichzeitig ein Recken der Bandabschnitte, die zwischen dem Bandeinzug 30 und dem Bandauszug 31 gehalten werden. Dies wird dadurch bewirkt, dass sich die Rollen des Bandauszugs 31 schneller als die Rollen des Bandeinzugs 30 bewegen.

Es wurden von den vier parallel eingezogenen Bänder 20 jeweils Längsabschnitte einer Länge von 142,5 mm in einem Pressvorgang über 4 Sekunden bei Wärmeeinwirkung und mit einem Flächendruck von 15MPa verpresst. Für die Thermofixierung hatte die obere Werkzeughälfte der Pressvorrichtung eine Temperatur von 256 °C. Nach einer Druckeinwirkung auf die vier Längsabschnitte der vier eingezogenen Bänder 20 über einen Zeitraum von 4 Sekunden wurden diese vier Bänder 20 mittels Bandeinzug 30 und Bandauszug 31 weiterbewegt, etwa um ca. 80 mm, und hinter der Pressvorrichtung 10 die geglätteten Abschnitte der Bänder 20 auf vier Rollen aufgewickelt, was in den Figuren nicht gezeigt ist.

Trotz des taktweisen Vorschubs kann eine solche Vorrichtung eine Kapazität von ca. 400 Metern pro Stunde erzielen.

Die in diesem Beispiel erzeugten Tragbänder besitzen eine Breite von 6 mm. Diese Breite variiert um 0,1 mm. Die Bänder zeigen über ihre gesamte Länge eine Dicke von 0,27 bis 0,285 mm, d.h. die Dicke variiert um 0,015 mm. Die beiden Seiten des jeweiligen Bandes sind sehr glatt, zeigen jeweils spiegelglatte Oberflächen, wobei die Gewebestruktur kaum noch zu erkennen ist. Dadurch besitzen die Bänder einen geringen Reibungswiderstand, eine für die Anwendung bei Rafflamellenstores vorteilhafte Eigenschaft. Die Reißfestigkeit dieser Tragbänder beträgt etwa 1000 N. Das Band zeigt auch nach einem Witterungstest, nämlich einer Einwirkung von UV-Strahlen über einen Zeitraum von 1000 Stunden noch eine Reißfestigkeit von 500 N. Das gereckte und thermofixierte Tragband ist unelastisch und besitzt eine maximale Dehnung von 1,3%. Die Steifheit liegt innerhalb des akzeptablen Toleranzbereichs, nämlich zwischen 40 mm und 60 mm.

### Bezugszeichenliste:

- 10: Vorrichtung
- 11: Pressraum
- 12: Werkzeughälfte, oben
- 13: Werkzeughälfte, unten
- 14: Heizung
- 20: Band
- 30: Bandeinzug
- 31: Bandauszug
- L: Längsrichtung von 20

## Patentansprüche

1. Verfahren zur Herstellung eines Tragbandes für Rafflamellenstores mit den folgenden Verfahrensschritten,
- Weben eines unelastischen Bandes aus thermoplastischen, hochfesten, spinndüsengefärbten Fäden,
- Recken des gewebten Bandes,
- Thermofixieren des gewebten und gereckten Bandes,
**dadurch gekennzeichnet, dass**
- das Thermofixieren und Glätten des gewebten und gereckten Bandes in einer Pressvorrichtung mit zwei planaren Oberflächen unter Temperatur-und Druckeinwirkung vorgenommen wird und
- anschließend das thermofixierte und geglättete Band der Pressvorrichtung entnommen wird.

2. Verfahren nach Anspruch 1, **dadurch gekennzeichnet, dass** hochfeste Kettfäden und Schussfäden aus Polyester miteinander verwebt werden, wobei die Schussfäden an den Längskanten des Bandes durch Fangfäden eingefangen werden und zusätzlich für die Vermaschung der Längskanten Sperrfäden eingesetzt werden.

3. Verfahren nach Anspruch 1 oder 2, **dadurch gekennzeichnet, dass** Recken des gewebten Bandes beim Einziehen in die Pressvorrichtung erfolgt, wobei vorzugsweise gleichzeitig mehrere gewebte Bänder in die Pressvorrichtung einzogen werden, besonders bevorzugt 4 gewebte Bänder.

4. Verfahren nach einem der Ansprüche 1 bis 3, **dadurch gekennzeichnet, dass** beim Pressvorgang die gewebten und gereckten Bänder zwischen zwei Werkzeughälften der Pressvorrichtung für einen Zeitraum von 1 bis 10 Sekunden, vorzugsweise 4 Sekunden, einer Temperatur von 150°C bis 300 °C, vorzugsweise 250 °C, und einem Flächendruck von 5 MPa bis 20 MPa, vorzugsweise 15 MPa, ausgesetzt sind, wodurch eine Thermofixierung und Glättung der Bänder erfolgt.

5. Verfahren nach einem der Ansprüche 1 bis 4, **dadurch gekennzeichnet, dass** die gewebten Bänder auf ein Coil aufgewickelt und durch den Bandeinzug von diesem Coil abgewickelt werden.

6. Verfahren nach einem der Ansprüche 1 bis 4, **dadurch gekennzeichnet, dass** jedes geglättete Band vom Bandauszug zu einem separaten Coil transportiert und dort aufgewickelt wird.

7. Verfahren nach einem der Ansprüche 1 bis 6, **dadurch gekennzeichnet, dass** die Bänder vor der Pressvorrichtung, in der Pressvorrichtung und hinter der Pressvorrichtung geführt vorwärts bewegt werden.

8. Tragband für Rafflamellenstores hergestellt nach einem Verfahren gemäß einem der Ansprüche 1 bis 7,
- aus einem unelastischen, gereckten, thermofixierten Gewebe, welches eine hohe Reißfestigkeit größer 700 N und eine geringe Dehnung von maximal 1,3% aufweist,
**dadurch gekennzeichnet, dass**
- das Gewebe aus thermoplastischen, hochfesten, spinndüsengefärbten Fäden besteht und
- aufgrund einer Thermofixierung zwischen zwei planaren Oberflächen eine geringe Dickenvariation von kleiner 0,015 mm sowie eine spiegelglatte Oberfläche auf beiden Seiten aufweist.

9. Tragband nach Anspruch 8, **dadurch gekennzeichnet, dass** das Gewebe aus schwarzen oder andersfarbigen Fäden besteht, welche witterungsbeständig sowie farbecht sind, vorzugsweise Fäden aus hochfesten Polyestergarnen, besonders bevorzugt aus verdrillten Multifilamentgarnen.

10. Tragband nach Anspruch 8 oder 9, **dadurch gekennzeichnet, dass** für das Gewebe die Kettfäden und die Schussfäden in einer unelastischen Gewebestruktur verwebt sind und vorzugsweise für die Vermaschung der Längskanten Fangfäden vorgesehen sind, wobei die Schuss- und Fangfäden zusätzlich durch Sperrfäden gesperrt sind.

11. Tragband nach einem der vorhergehenden Ansprüche 8 bis 10, **dadurch gekennzeichnet, dass** das Band nach einem Witterungstest, nämlich unter Einwirkung von UV-Bestrahlung über einen Zeitraum von 1000 h, eine Reißfestigkeit von mindestens 350N aufweist, vorzugsweise 500 N, und eine Steifheit innerhalb des akzeptablen Toleranzbereichs besitzt, nämlich 40 mm bis 60 mm bei Prüfung eines 1000 mm langen Bandstücks und Verwendung eines Auflagedorns mit einem Durchmesser von 5 mm.

12. Vorrichtung zum quasikontinuierlichen Thermofixieren und Glätten eines gewebten Bandes,
- mit Haltemitteln für ein Band (20) oder für mehrere Bänder (20), so dass zumindest ein Längsabschnitt der Bänder (20) im Pressraum (11) gehalten werden kann,
- mit Transportmitteln zum taktweisen Vorschub der Bänder (20) in deren Längsrichtung (L), so dass nacheinander Längsabschnitte der Bänder (20) in den Pressraum (11) hinein und heraus gezogen werden können,
- mit einer Heizeinrichtung (14) zum Heizen von mindestens einer der beiden Werkzeughälften (12, 13), **dadurch gekennzeichnet, dass** die Vorrichtung einen Pressraum (11) zwischen zwei Werkzeughälften (12, 13) aufweist, wobei die Werkzeughälften (12, 13) eine plane Oberfläche besitzen und zumindest eine Werkzeughälfte (12) für den Pressvorgang zwischen einer Ruheposition und einer Arbeitsposition bewegbar ist und wobei der Pressraum (11) in der Ruheposition der Werkzeughälften von mindestens zwei gegenüberliegenden Seiten zugänglich ist.

13. Vorrichtung nach Anspruch 12, **dadurch gekennzeichnet, dass** vor und hinter dem Pressraum (11) Längsführungen für den parallelen Transport von mehreren Bändern (20), vorzugsweise von vier Bändern (20) vorgesehen sind.

## Claims

1. Method for manufacturing a carrier belt for a reefing blind with the following process steps,
- weaving an inelastic belt made from thermoplastic, high-strength, spun-dyed colour threads,
- stretching the woven belt,
- thermo-setting the woven and stretched belt,
**characterized in that**
- the thermo-setting and smoothing of the woven and stretched belt is carried out in a pressing device with two planar surfaces under temperature and pressure and,
- subsequently, the thermo-set and smoothed belt is removed from the pressing device.

2. Method in accordance with claim 1, **characterized in that** high-strength warp threads and weft threads made from polyester are interwoven with one another, whereby, the weft threads are captured on the longitudinal edge of the belt and also inserted for meshing the longitudinal edges of the locking threads.

3. Method in accordance with claim 1 or 2, **characterized in that** stretching of the woven belt is carried out when pulling into the pressing device, whereby, it is preferred that, simultaneously, multiple woven belts are pulled into the pressing device, specially preferred, 4 woven belts.

4. Method in accordance with one of the claims 1 to 3, **characterized in that**, during the pressing procedure, the woven and stretched belts are subjected to a temperature of 150°C to 300 °C, preferably 250 °C, between two halves of a mould of the pressing device for a period of 1 to 10 seconds, preferably 4 seconds and a surface pressure of 5 MPa to 20 MPa, preferably 15 MPa, whereby, thermo-setting and smoothing of the belts is carried out.

5. Method in accordance with one of the claims 1 to 4, **characterized in that** the woven belts are wound onto a coil and unwound from the coil by pulling in the belt.

6. Method in accordance with one of the claims 1 to 4, **characterized in that** each smoothened belt is transported to a separate coil by the belt extraction and is wound up there.

7. Method in accordance with one of the claims 1 to 6, **characterized in that** the belts are guided forwards before the pressing device, in the pressing device and after the pressing device.

8. Carrier belt for the reefing blind is manufactured in accordance with a method in accordance with one of the claims 1 to 7,
- made from a inelastic, stretched, thermo-set fabric that features a high tensile strength of greater than 700 N and low elongation of maximum 1.3%,
**characterized in that**
- the fabric is made from thermoplastic, high-strength, spun-dyed colour threads and,
- due to thermo-setting between two planar surfaces, features low variation of thickness, less than 0.015 mm, as well as a mirror-smooth surface on both sides.

9. Carrier belt in accordance with claim 8, **characterized in that** the fabric comprises of black or other coloured threads, which are resistant to weather and colourfast, preferably threads made from high-strength polyester yarns, particularly preferred made from twisted multi-filament yams.

10. Carrier belt in accordance with claim 8 or 9, **characterized in that**, for the fabric, the warp threads and the weft threads are woven in an inelastic fabric structure and, preferably, catch thread for meshing of the longitudinal edges, whereby, the weft and catch threads are also locked by locking threads.

11. Carrier belt in accordance with one of the previous claims 8 to 10, **characterized in that**, after a weather test, namely under the influence of UV radiation over a period of 1000 h, the belt features a tensile strength of minimum 350N, preferably 500 N and the rigidity is within the acceptable tolerance range, namely 40 mm to 60 mm when testing a part of the belt 1000 mm long and using a support dome of diameter 5 mm.

12. Device for quasi-continuous thermo-fixing and smoothing a woven belt,
- with means of supporting a belt (20) or for multiple belts (20), so that at least one longitudinal section of the belts (20) can be held in the pressing chamber (11),
- with transportation devices for longitudinal (L) cyclic feed of the belts (20), so that longitudinal sections of the belts (20) can be successively pulled into and pulled out of the pressing chamber (11),
- with heating equipment (14) to heat a minimum of one of the two halves of the mould (12, 13), **characterized in that** the device features a pressing chamber (11) between the two halves of the mould (12, 13), whereby, the halves of the mould (12, 13) have a level surface and at least one of the halves of the mould (12) can be moved between a resting position and an operating position for the pressing procedure and, whereby, the pressing chamber (11) is accessible, from a minimum of two opposing sides when in the resting position of the halves of the mould.

13. Device in accordance with claim 12, **characterized in that** longitudinal guides for parallel transportation of multiple belts (20), preferably four belts (20), are provided in front of and behind the pressing chamber (11),

## Revendications

1. Procédé de fabrication d'une sangle porteuse pour store à lamelles, passant par les étapes suivantes :
- Tissage d'une sangle inélastique à partir de fils thermoplastiques d'une haute solidité colorés dans la filière,
- Étirage de la sangle tissée,
- Thermofixation de la sangle tissée et étirée,
**caractérisé en ce que**
- la thermofixation et le lissage de la sangle tissée et étirée ont lieu dans un dispositif de pressage comprenant deux surfaces planaires, sous l'effet de la température et de la pression, et que
- ensuite la sangle thermofixée et lissée est retirée du dispositif de pressage.

2. Procédé selon la revendication 1, **caractérisé en ce que** des fils de chaîne et fils de trame en polyester d'une haute solidité sont tissés les uns avec les autres, sachant que les fils de trame sur les bords longitudinaux de la sangle sont interceptés par des fils à cet effet et qu'en plus des fils de blocage servent au maillage des bords longitudinaux.

3. Procédé selon la revendication 1 ou 2, **caractérisé en ce que** l'étirage de la sangle tissée a lieu lors de l'introduction par traction dans le dispositif de pressage, sachant que de préférence plusieurs sangles tissées, et plus particulièrement de préférence 4 sangles tissées, sont simultanément introduites par traction dans le dispositif de pressage.

4. Procédé selon l'une des revendications 1 à 3, **caractérisé en ce que** pendant l'opération de pressage les sangles tissées et étirées sont exposées, entre les deux moitiés d'outil du dispositif de pressage, pendant une période comprise entre 1 et 10 secondes, de préférence 4 secondes, à une température comprise entre 150 °C et 300 °C, de préférence 250 °C, et à une pression surfacique comprise entre 5 MPa et 20 MPa, de préférence 15 MPa, ce qui a pour effet de thermofixer et de lisser les sangles.

5. Procédé selon l'une des revendications 1 à 4, **caractérisé en ce que** les sangles tissées sont enroulées sur une bobine et qu'elles sont déroulées de cette bobine sous l'effet du dispositif d'introduction.

6. Procédé selon l'une des revendications 1 à 4, **caractérisé en ce que** chaque sangle lissée est transportée par le dispositif d'extraction vers une bobine séparée et qu'elle y est enroulée dessus.

7. Procédé selon l'une des revendications 1 à 6, **caractérisé en ce que** les sangles sont déplacées et guidées en avant, en amont du dispositif de pressage, dans le dispositif de pressage et en aval du dispositif de pressage.

8. Sangle porteuse pour stores à lamelles, fabriquée selon un procédé conforme à l'une des revendications 1 à 7,
- composée d'un textile thermofixé, étiré, inélastique, qui présente une haute résistance à la déchirure dépassant 700 N, et un allongement réduit, de 1,3 % maximum.
**caractérisée en ce que**
- le textile se compose de fils thermoplastiques d'une haute solidité, teintés dans la filière et
- qu'en raison d'une thermofixation entre deux surfaces planaires, il présente une variation d'épaisseur réduite, inférieure à 0,015 mm, ainsi qu'une surface lisse comme un miroir des deux côtés.

9. Sangle porteuse selon la revendication 8, **caractérisée en ce que** le textile se compose de fils noirs ou d'une autre couleur résistants aux intempéries et d'une teinte inaltérable, de préférence de fils en polyester d'une haute solidité, plus particulièrement de préférence de fils multifilamentaires torsadés.

10. Sangle porteuse selon la revendication 8 ou 9, **caractérisée en ce que** pour le textile les fils de chaîne et les fils de trame sont tissés pour former une structure textile inélastique, et que pour mailler les bords longitudinaux sont prévus de préférence des fils intercepteurs, sachant que les fils de trame et ceux d'interception sont bloqués en plus par des fils de blocage.

11. Sangle porteuse selon l'une des revendications précédentes 8 à 10, **caractérisée en ce que** la sangle, après un test d'exposition aux intempéries, à savoir incluant une exposition au rayonnement ultraviolet sur une période de 1 000 h, présente une résistance à la déchirure d'au moins 350 N, de préférence 500 N, et une rigidité située dans la plage de tolérances acceptable, à savoir entre 40 mm et 60 mm lors du test d'un segment de sangle long de 1 000 mm consistant à appliquer dessus une surface en forme de dôme de 5 mm de diamètre.

12. Dispositif servant à la thermofixation et au lissage quasi-continus d'un ruban tissé,
- comprenant des moyens de retenue d'une sangle (20) ou de plusieurs sangles (20), de sorte qu'au moins un segment longitudinal des sangles (20) peut être maintenu dans le compartiment de pressage (11),
- comprenant des moyens de transport permettant de faire avancer de manière cyclique les sangles (20) dans leur direction longitudinale (L) de sorte que des segments longitudinaux des sangles (20) soient tractés les uns après les autres pour entrer dans le compartiment de pressage (11) et pour en sortir,
- comprenant un équipement de chauffage (14) servant à chauffer au moins l'une des deux moitiés (12, 13) d'outil, **caractérisé en ce que** le dispositif présente un compartiment de pressage (11) entre deux moitiés d'outils (12, 13), sachant que les moitiés d'outil (12, 13) possèdent une surface plane et qu'au moins une moitié d'outil (12) est déplaçable entre une position de repos et une position de travail pour l'opération de pressage, et sachant que le compartiment de pressage (11) est accessible d'au moins deux côtés opposés lorsque les moitiés d'outil se trouvent en position de repos.

13. Dispositif selon la revendication 12, **caractérisé en ce qu'**en amont et en aval du compartiment de pressage (11) sont prévus des guidages longitudinaux pour le transport parallèle de plusieurs sangles (20), de préférence de quatre sangles (20).
